# EUROPEAN PATENT SPECIFICATION

(11) **EP 0 750 125 B1**
(45) Date of publication and mention of the grant of the patent: **31.05.2000**
(21) Application number: 96304595.0
(22) Date of filing: 20.06.1996
(51) Int. Cl.: F16C 33/46

(54) **Bearing retainer**
Lagergehäuse
Cage pour roulement

(30) Priority: 20.06.1995 US 365
(43) Date of publication of application: 27.12.1996
(73) Proprietor: THE TORRINGTON COMPANY, Torrington, Connecticut 06790 (US)
(72) Inventor: Podhajecki, Stephen T., Norfolk, CT 06058 (US); Rhodes, John H., Torrington, CT 06790 (US)
(74) Representative: Feakins, Graham Allan

(56) References cited:
- DE-A- 2 922 361
- DE-A- 4 211 400
- DE-A- 4 326 791
- DE-C- 376 230
- GB-A- 908 826
- US-A- 2 705 666
- US-A- 3 782 795
- US-A- 5 352 047

## Description

This invention relates generally to bearing retainers and, more particularly, to a modular bearing retainer suitable for retaining rollers within large diameter roller bearings, according to the pre-caracterising portion of claim 1 (US 5 352 047).

In conventional large roller bearings, the rollers are typically retained by bearing retainers that are machines out of large diameter, heavy wall, non-ferrous tubing, resulting in high material and processing costs. Additionally, such bearing retainers need to be unique for any combination of roller diameter, length, pitch and pitch diameter, and must be machined accordingly. In many cases, the resulting machined bearing retainer may restrict lubricant flow and may have a heavy mass that can lead to failure from reversing loads, in particular applications.

According to the present invention, there is provided a bearing retainer for use with a roller bearing having rollers between an inner bearing ring and an outer bearing ring, the bearing retainer comprising an annular retainer ring to be positioned between the inner bearing ring and the outer bearing ring such that the retainer ring engages first ends of the rollers to retain the bearing retainer in the axially inward direction, and a plurality of separator elements, characterised in that the separator elements are pivotably mounted on the retainer ring such that the separator elements space the rollers circumferentially, the separator elements including a narrow portion for engagement with a thrust flange of one of the inner and outer bearing rings to restrain the bearing retainer in an axial direction and including a wide portion for engagement with the respective rollers to retain the rollers in one of the radially outward and radially inward directions.

For a better understanding of the invention and to show how the same is carried into effect, reference will now be made, by way of example, to the accompanying drawings, in which:-
Figure 1 is an exploded cross-sectional view of a conventional bearing retainer according to the prior art;
Figure 2 is an end view of a portion of the conventional bearing retainer of Figure 1, with portions cut away;
Figure 3 is a perspective view of portions of two bearing retainers according to the present invention in combination with a roller;
Figure 4 is a perspective view of a second embodiment of the present bearing retainer,
Figure 5 is an enlarged pictorial view of a clip and rivet for use in the bearing retainers of Figures 3 and 4;
Figure 6 is a perspective view of the bearing retainer of Figure 3 in combination with a roller and outer bearing ring;
Figure 7 is an exploded view of a third embodiment of the present bearing retainer;
Figure 8 is an exploded view of a separator element, stud and bushing for use in the bearing retainer of Figure 7; and
Figure 9 is an exploded view of two bearing retainers of Figure 7 in combination with a roller bearing.

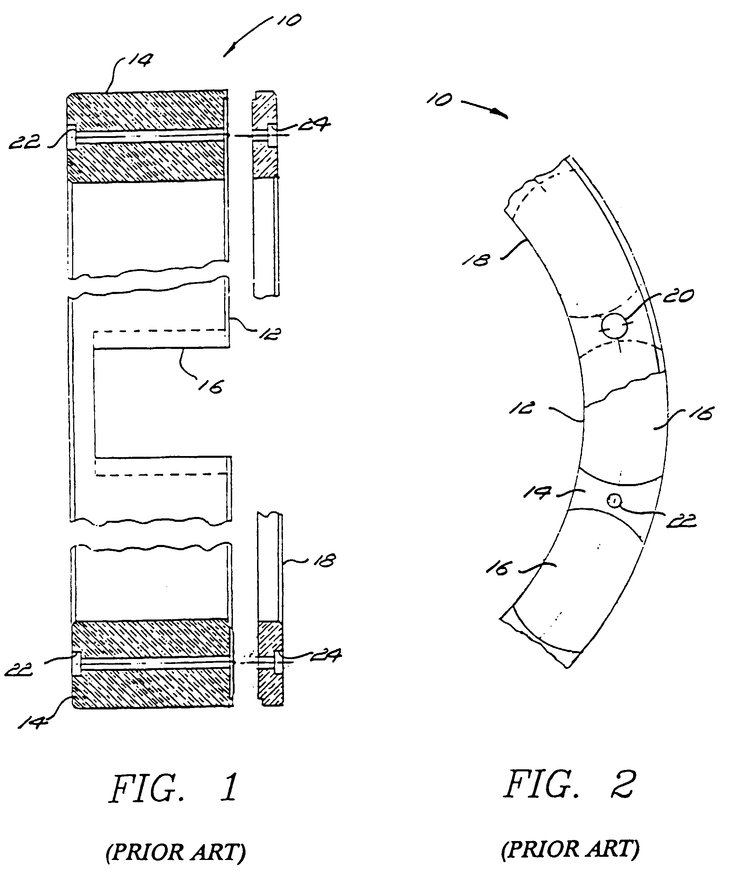

Figures 1 and 2 illustrate a conventional bearing retainer 10 machined from brass, bronze, ductile iron or steel for use with a roller bearing. A retainer body 12 has separator portions 14 forming roller pockets 16. A retainer end plate 18 is fixed to the retainer body 12 by recessed rivets 20 (not shown in Figure 1) or by screws or other fasteners through counterbored holes 22 and 24 after insertion of the rollers, not shown.

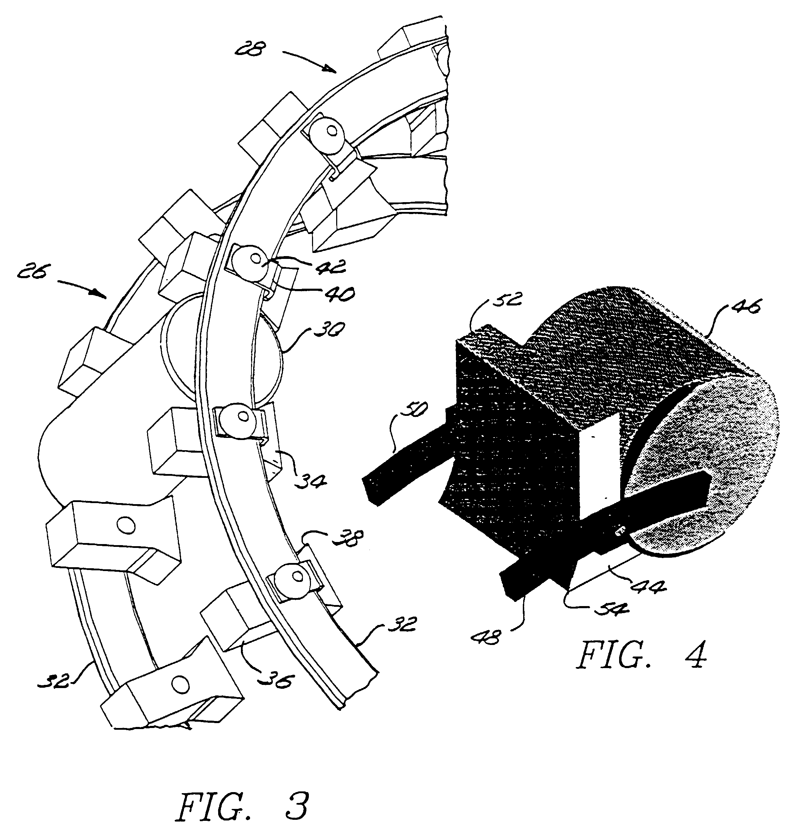

Figure 3 illustrates portions of two of the present bearing retainers 26 and 28 with one of a plurality of rollers 30 in position therebetween. The bearing retainers 26 and 28 each comprise an annular retainer ring 32 and a plurality of separator elements 34 that space the rollers 30 circumferentially. The separator elements 34 are wedge-shaped with a narrow portion 36 for engagement with a thrust flange, as described below, and an opposite wide portion 38 for engagement with the rollers 30 to restrain the rollers in either the radially outward or radially inward direction. In the embodiment of Figure 3, the wide portion 38 limits radially inward movement of the rollers 30.

The separator elements 34 are mounted on the retainer ring 32 so as to be axially inward of the retainer ring 32 and pivotally movable with respect to the retainer ring 32. Any convenient type of pivotal mounting may be used. In the embodiment of Figure 3, for example, the separator elements 34 are mounted by metallic clips 40 and pins 42. The metallic clips 40 allow a predetermined amount of pivotal motion but prevent full rotation of the separator elements. The pivotable mounting of the separator elements provides flexibility and reduces stress on the retainer ring, allowing a less massive structure to be used.

Figure 4 illustrates a second embodiment, where separator elements 44 extend the full axial length of rollers 46 and are pivotally mounted on a first retainer ring 48 and a second retainer ring 50. A narrow portion 52 of each separator element 44 engages a thrust flange, as described below, and a wide portion 54 engages the rollers 46 to limit radial movement of the rollers. As with the first embodiment, the separator elements 44 could be reversed, with the wide portion 54 projecting radially outward, for roller bearings with either a flanged inner or flanged outer race.

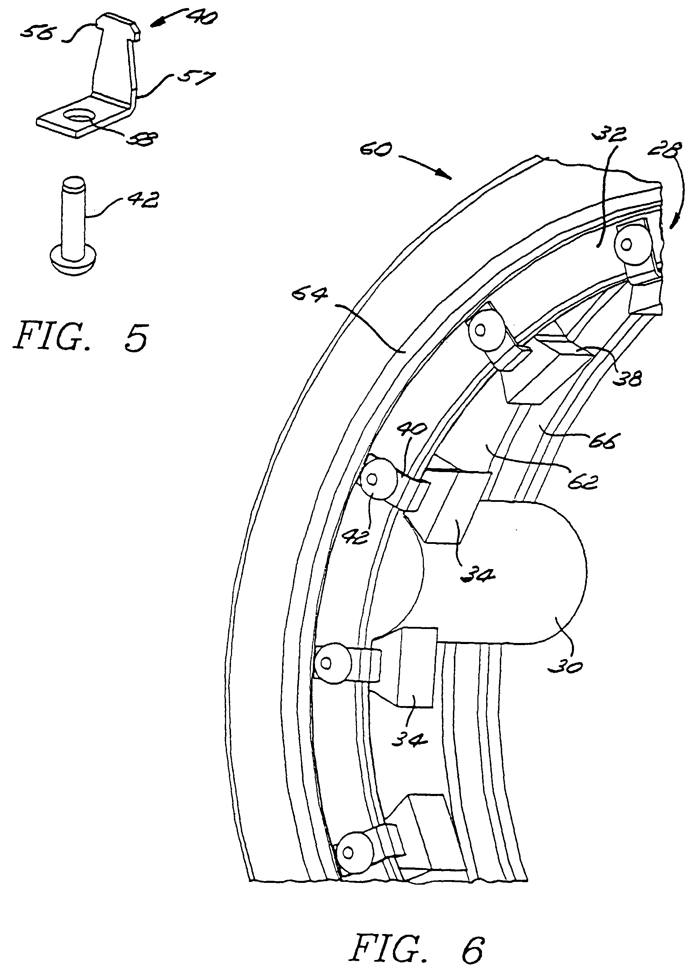

One form of the metallic clip 40 is illustrated in Figure 5 and may be formed as a simple stamping with a barbed end 56 to be insert moulded into a polymer composite or sintered product forming the separator elements 34 and 44. A mid-portion 57 extends axially from the separator elements 34 and 44 to engage the retainer ring and limit pivotal motion. The metallic clip/separator element subassembly may be attached by a pin 42, rivet, screw or other device, or by fitting a "U" type clip having an integral, formed tab or dimple, to engage a locating hole 58, over the ring and into the insert.

Figure 6 illustrates the bearing retainer 28 of Figure 3 in position against an outer bearing ring 60 and with the roller 30 in a channel-shaped raceway 62. An axially outer thrust flange 64 and an axially inner thrust flange 66 retain the rollers axially. The narrow portion 36 (shown in Figure 3) of each separator element 34 engages the outer thrust flange 64 to restrain axially outward movement of the bearing retainer 28. The rollers 30 engage the retainer ring 32 and restrain axially inward movement of the bearing retainer 28.

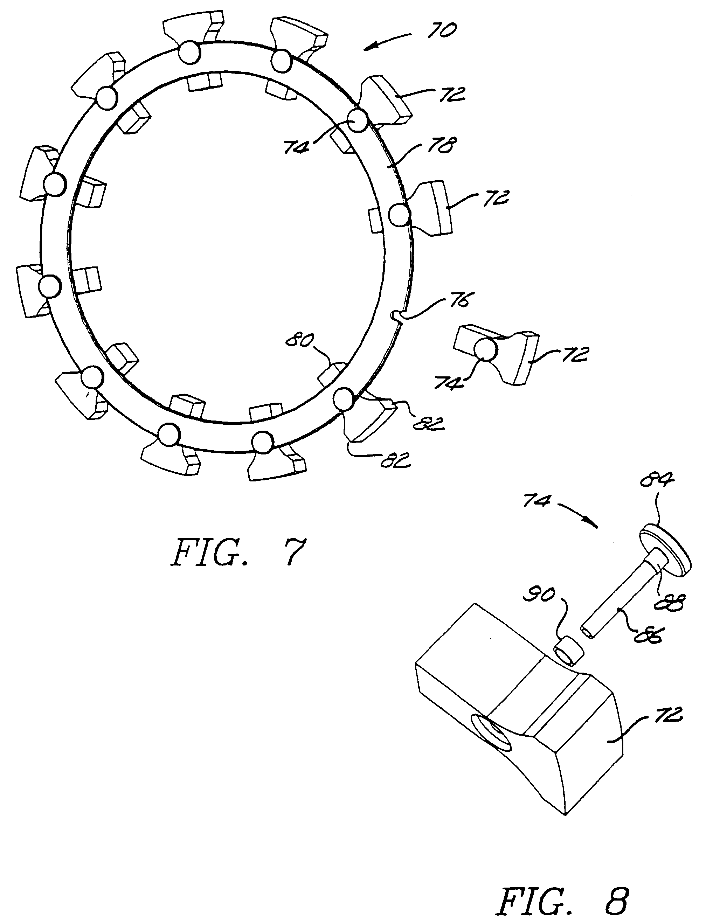

Figure 7 illustrates a bearing retainer 70 similar to the embodiments previously described but employing a snap-together assembly. The separator elements 72 have stud means 74 engageable with keyhole shaped slots 76 in the radially outward perimeter of the retainer ring 78. In the embodiment illustrated, the separator elements 72 each have a narrow portion 80 extending radially inward for engagement with a thrust flange of an inner bearing ring and have a wide portion 82 extending radially outward to restrain radially outward movement of rollers, not shown. Other variations with the narrow and wide portions reversed or with the keyhole shaped slots 72 in the radially inward perimeter of the retainer ring 78 would be used for various roller bearing applications.

Figure 8 illustrates a preferred construction of stud means 74, where a head portion 84 engages the retainer ring 78 to restrain axially outward movement of the retainer ring, a pin portion 86 penetrates the separator element 72, and a raised shaft portion 88 spaces the head portion 84 from the separator element 72. A bushing 90 loosely overlies the shaft portion 88 and is freely rotatable with respect to the shaft portion 88. The bushings 90 are resiliently deformable so as to collapse during insertion into the narrow openings of the slots 76 and reform themselves to conform to the slots to enhance the snap-together assembly of the bearing retainer 70. The pin 86 may be secured as a rivet or by various other means.

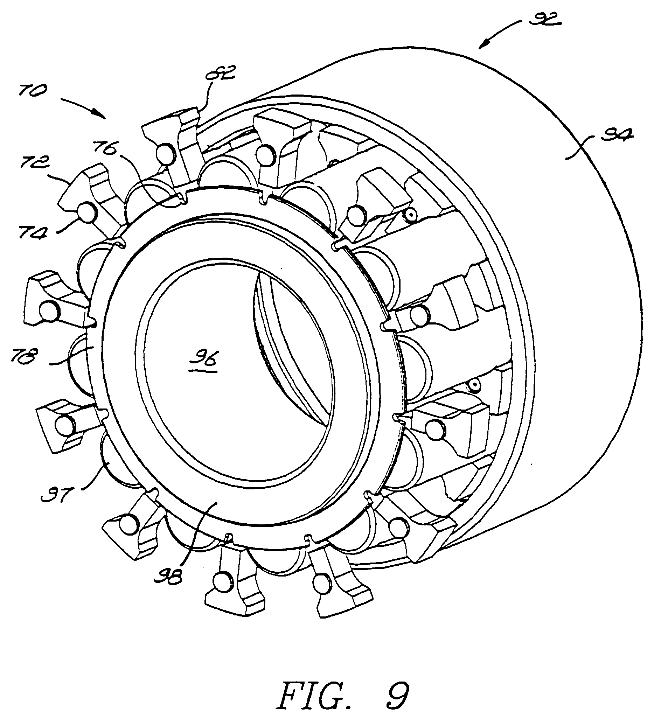

In Figure 9, an exploded view, two bearing retainers 70 are illustrated in combination with a roller bearing 92 having an outer bearing ring 94, inner bearing ring 96 and rollers 97. The inner bearing ring 96 has a channel-shaped inner raceway with thrust flanges 98 in engagement with the narrow portions 80 of the separator elements 72 to restrain the bearing retainers 70 in the radially outward direction. Preferably, the bearing retainers 70 are piloted by engagement of the thrust flanges 98 by radially inner surfaces of the retainer rings 78, thereby avoiding any wiping of lubricant from the inner raceway.

The present construction provides a modular assembly constructed from a pool of common components, or components requiring only minor geometry differences accomplished with inexpensive, adaptable tooling. Common components can be used for a broad range of roller bearings with various roller sizes, pitch and pitch diameter. Portions of the assembly are designed such that near net shape raw material may be used to achieve the geometry differences through adjustable or adaptive tooling. The present bearing retainer is low mass and provides improved space for lubricant with respect to prior art devices. The separator elements may be moulded of polymer or may be made from ferrous or non-ferrous metals or other materials by investment casting, machining or other means.

If the separator elements extend only a fraction of the roller length, two assemblies for each roller path are preferred, operating independently of each other, and can accommodate any length roller. One separator element extending the full length of the roller or two inserts connected through a bridging device, acting as one, would not have to extend beyond a thrust flange for retention in the axially outward direction. A simple wedge-shaped separator element configuration accommodates various roller diameters and moderate differences in circumferential spacing, adding increased versatility.

The diameter of the retainer ring would usually change with the pitch diameter of any given roller bearing; however, the material would be the same cross-section. By changing the spacing of the locating holes and the blank length, any desired ring could be formed from a common stock material. Various sequences may be used to facilitate assembly, depending on the type of roller bearing with which the invention is used. At least a portion of the separator elements may be attached to the retainer ring after the retainer ring and rollers are positioned within a channelled raceway.

The present construction allows several combinations of roller diameters, lengths, pitch and pitch diameter to be accommodated with a standard separator element subassembly and a retainer ring that are easily manufactured. Various sized separator elements, each accommodating several combinations of bearing parameters facilitates existing roller bearing configurations and permits satisfying new applications from a pool of standard components. The design is light in weight and leaves much of the roller bearing open to free circulation of lubrication.

## Claims

1. A bearing retainer for use with a roller bearing having rollers (30) between an inner bearing ring and an outer bearing ring (60), the bearing retainer comprising an annular retainer ring (32) to be positioned between the inner bearing ring and the outer bearing ring such that the retainer ring engages first ends of the rollers (30) to retain the bearing retainer in the axially inward direction, and a plurality of separator elements (34), characterised in that the separator elements (34) are pivotably mounted on the retainer ring (32) such that the separator elements space the rollers (30) circumferentially, the separator elements including a narrow portion (36) for engagement with a thrust flange of one of the inner and outer bearing rings to restrain the bearing retainer in an axial direction and including a wide portion (38) for engagement with the respective rollers (30) to retain the rollers in one of the radially outward and radially inward directions.

2. A bearing retainer according to claim 1, wherein each separator element (34) extends axially a distance less than half the axial length of the rollers (30).

3. A bearing retainer according to claim 1, wherein the separator element (44) extends axially the full axial length of the rollers (46) and wherein the bearing retainer further comprises a second annular retainer ring (50) to be positioned between the inner bearing ring and the outer bearing ring such that the second retainer ring (50) engages second ends of the rollers (46) to retain the rollers in an axially inward direction, at least some of the separator elements (44) being pivotably connected to the second retainer ring.

4. A bearing retainer according to claim 1, 2 or 3, wherein the narrow portions (36, 52) of the separator elements (34, 44) extend radially outwardly for engagement with a thrust flange of the outer bearing ring and wherein the wide portions (38, 54) of the separator elements extend radially inwardly to retain the rollers (30, 46) in the radially inward direction.

5. A bearing retainer according to claim 1, 2 or 3, wherein the narrow portions (36, 52) of the separator elements (34, 44) extend radially inwardly for engagement with a thrust flange of the inner bearing ring and wherein the wide portions (38, 54) of the separator elements extend radially outwardly to retain the rollers (30, 46) in the radially outward direction.

6. A bearing retainer according to any one of the preceding claims, wherein the wedge-shaped separator elements include clips (40) extending axially from the wide portions of the separator elements and engageable with the retainer ring to limit pivotal motion of the separator elements with respect to the retainer ring.

7. A bearing retainer according to claim 6, wherein the clips (40) include a radial portion axially outward of the retainer ring and wherein the separator elements are pivotably mounted by a shaft means between the radial portion and the separator elements and through the retainer ring.

8. A bearing retainer according to any one of the preceding claims, wherein the separator elements (72) further comprise stud means (74) extending into the retainer ring (78) to provide the pivotable mounting of the separator elements (72).

9. A bearing retainer according to claim 7, wherein the retainer ring (78) includes key hole-shaped slots (76) engaging the stud means (74) to provide a snap-together assembly of the separator elements (72) onto the retainer ring.

10. A bearing retainer according to claim 9, wherein the slots (76) of the retainer ring (78) extend to a radial perimeter of the retainer ring.

11. A bearing retainer according to claim 9, wherein the slots (76) of the retainer ring (78) extend to a radially outward perimeter of the retainer ring such that the stud means (74) is movable in a radially inward direction into the slots to provide the snap-together assembly of the retainer ring.

12. A bearing retainer according to claim 8, 9, 10 or 11, wherein the stud means (74) includes a head portion (84) engageable with the retainer ring (78) to restrain axially outward movement of the retainer ring, a shaft portion (86), and a bushing (90) overlying the shaft portion, the bushing being resiliently deformable during a snap-together assembly of the retainer ring.

13. A roller bearing assembly comprising a roller bearing retainer according to any one of the preceding claims, with rollers (30) between an inner bearing ring and an outer bearing ring, one of the bearing rings having a thrust flange.

## Patentansprüche

1. Lagergehäuse zur Verwendung mit einem Wälzlager, das Rollen (30) zwischen einem inneren Lagerring und einem äußeren Lagerring (60) hat, wobei das Lagergehäuse einen ringförmigen Haltering (32) aufweist, der zwischen dem inneren Lagerring und dem äußeren Lagerring so anzuordnen ist, daß der Haltering an ersten Enden der Rollen (30) angreift, um das Lagergehäuse in der axial nach innen gerichteten Richtung zu halten, und mit einer Vielzahl von Abstandselementen (34), **dadurch gekennzeichnet**, daß die Abstandselemente (34) schwenkbar an dem Haltering (32) derart gelagert sind, daß die Abstandselemente die Rollen (30) in Umfangsrichtung auf Abstand halten, wobei die Abstandselemente einen schmalen Abschnitt (36) zum Eingriff mit einem Axialdruckflansch eines der inneren und äußeren Lagerringe aufweisen, um das Lagergehäuse in einer axialen Richtung zu halten, und einen breiten Abschnitt (38) zum Eingriff mit den entsprechenden Rollen (30) aufweisen, um die Rollen in einer der radial nach außen und radial nach innen gerichteten Richtungen zu halten.

2. Lagergehäuse nach Anspruch 1, bei dem jedes Abstandselement (34) sich axial über eine Entfernung erstreckt, die kleiner ist als die halbe axiale Länge der Rollen (30).

3. Lagergehäuse nach Anspruch 1, bei dem das Abstandselement (44) sich axial über die volle axiale Länge der Rollen (46) erstreckt und wobei das Lagergehäuse ferner einen zweiten ringförmigen Haltering (50) aufweist, der zwischen dem inneren Lagerring und dem äußeren Lagerring derart anzuordnen ist, daß der zweite Haltering (50) an zweiten Enden der Rollen (46) angreift, um die Rollen in einer axial nach innen gerichteten Richtung zu halten, wobei wenigstens einige der Abstandselemente (44) schwenkbar mit dem zweiten Haltering verbunden sind.

4. Lagergehäuse nach Anspruch 1, 2 oder 3, bei dem die schmalen Abschnitte (36, 52) der Abstandselemente (34, 44) sich radial nach außen zum Eingriff mit einem Axialdruckflansch des äußeren Lagerrings erstrecken und wobei die breiten Abschnitte (38, 54) der Abstandselemente sich radial nach innen erstrecken, um die Rollen (30, 46) in der radial nach innen gerichteten Richtung zu halten.

5. Lagergehäuse nach Anspruch 1, 2 oder 3, bei dem die schmalen Abschnitte (36, 52) der Abstandselemente (34, 44) sich radial nach innen zum Eingriff mit einem Axialdruckflansch des inneren Lagerrings erstrecken und wobei die breiten Abschnitte (38, 54) der Abstandselemente sich radial nach außen erstrecken, um die Rollen (30, 46) in der radial nach außen gerichteten Richtung zu halten.

6. Lagergehäuse nach einem der vorhergehenden Ansprüche, bei dem die keilförmigen Abstandselemente Klammern (40) aufweisen, die sich axial von den breiten Abschnitten der Abstandselemente her erstrecken und die mit dem Haltering in Eingriff bringbar sind, um eine Schwenkbewegung der Abstandselemente in Bezug auf den Haltering zu begrenzen.

7. Lagergehäuse nach Anspruch 6, bei dem die Klammern (40) einen radialen Abschnitt axial außerhalb des Halterings aufweisen und wobei die Abstandselemente schwenkbar mittels einer Zapfeneinrichtung gelagert sind, die sich zwischen dem radialen Abschnitt und den Abstandselementen und durch den Haltering hindurch erstreckt.

8. Lagergehäuse nach einem der vorhergehenden Ansprüche, bei dem die Abstandselemente (72) ferner eine Bolzeneinrichtung (74) aufweisen, die sich in den Haltering (78) hinein erstreckt, um die schwenkbare Lagerung der Abstandselemente (72) zu schaffen.

9. Lagergehäuse nach Anspruch 7, bei dem der Haltering (78) schlüssellochartig geformte Schlitze (76) aufweist, die an den Bolzeneinrichtungen (74) angreifen, um eine zusammenschnappbare Halterung der Abstandselemente (72) an dem Haltering zu schaffen.

10. Lagergehäuse nach Anspruch 9, bei dem die Schlitze (76) des Halterings (78) sich bis zu einem radialen Umfang des Halterings erstrecken.

11. Lagergehäuse nach Anspruch 9, bei dem die Schlitze (76) des Halterings (78) sich bis zu einem radial äußeren Umfang des Halterings derart erstrecken, daß die Bolzeneinrichtung (74) in einer radial nach innen gerichteten Richtung in die Schlitze hinein bewegbar ist, um die zusammenschnappbare Halterung des Halterings zu schaffen.

12. Lagergehäuse nach Anspruch 8, 9, 10 oder 11, bei der die Bolzeneinrichtung (74) einen Kopfabschnitt (84) aufweist, der mit dem Haltering (78) in Eingriff bringbar ist, um eine axial nach außen gerichtete Bewegung des Halterings zu begrenzen, sowie einen Schaftabschnitt (86) und eine Buchse (90), die den Schaftabschnitt überlagert, wobei die Buchse während eines Zusammenschnapp-Vorgangs an dem Haltering nachgiebig verformbar ist.

13. Wälzlageranordnung mit einem Wälzlagergehäuse nach einem der vorhergehenden Ansprüche mit Rollen (30) zwischen einem inneren Lagerring und einem äußeren Lagerring, wobei einer der Lagerringe einen Axialdruckflansch hat.

## Revendications

1. Organe de retenue de roulement, destiné à être utilisé avec un roulement à rouleaux possédant des rouleaux (30) disposés entre une bague interne et une bague externe (60) de roulement, l'organe de retenue de roulement comprenant une bague (32) d'organe de retenue destinée à être disposée entre la bague interne de roulement et la bague externe de roulement de manière que la bague d'organe de retenue soit au contact de premières extrémités des rouleaux (30) pour retenir l'organe de retenue de roulement en direction axiale vers l'intérieur, et plusieurs éléments séparateurs (34), caractérisé en ce que les éléments séparateurs (34) sont montés de façon pivotante sur la bague (32) d'organe de retenue afin que les éléments séparateurs maintiennent les rouleaux (30) à distance en direction circonférentielle, les éléments séparateurs comprenant une partie étroite (36), destinée à être au contact d'un flasque de butée de l'une des bagues interne et externe de roulement pour retenir l'organe de retenue de roulement en direction axiale, et une partie large (38), destinée à être au contact des rouleaux respectifs (30) afin que les rouleaux soient retenus en direction radiale dans l'un des sens vers l'extérieur et vers l'intérieur.

2. Organe de retenue de roulement selon la revendication 1, dans lequel chaque élément séparateur (34) s'étend axialement sur une distance inférieure à la moitié de la longueur axiale des rouleaux (30).

3. Organe de retenue de roulement selon la revendication 1, dans lequel l'élément séparateur (44) s'étend axialement sur toute la longueur axiale des rouleaux (46), et dans lequel l'organe de retenue de roulement comporte en outre une seconde bague (50) d'organe de retenue destinée à être positionnée entre la bague interne et la bague externe de roulement de manière que la seconde bague (50) d'organe de retenue soit au contact des secondes extrémités des rouleaux (46) et retienne les rouleaux en direction radiale vers l'intérieur, certains au moins des éléments séparateurs (44) étant raccordés de manière pivotante à la seconde bague d'organe de retenue.

4. Organe de retenue de roulement selon la revendication 1, 2 ou 3, dans lequel les parties étroites (36, 52) des éléments séparateurs (34, 44) s'étendent radialement vers l'extérieur pour être au contact d'un flasque de butée de la bague externe de roulement, et dans lequel les parties larges (38, 54) des éléments séparateurs s'étendent radialement vers l'intérieur pour retenir les rouleaux (30, 46) en direction radiale vers l'intérieur.

5. Organe de retenue de roulement selon la revendication 1, 2 ou 3, dans lequel les parties étroites (36, 52) des éléments séparateurs (34, 44) s'étendent radialement vers l'intérieur pour être au contact d'un flasque de butée de la bague interne de roulement, et dans lequel les parties larges (38, 54) des éléments séparateurs s'étendent radialement vers l'extérieur pour retenir les rouleaux (30, 46) en direction radiale vers l'extérieur.

6. Organe de retenue de roulement selon l'une quelconque des revendications précédentes, dans lequel les éléments séparateurs en forme de coin comportent des agrafes (40) qui s'étendent axialement depuis les parties larges des éléments séparateurs et qui peuvent coopérer avec la bague d'organe de retenue pour limiter le mouvement de pivotement des éléments séparateurs par rapport à la bague d'organe de retenue.

7. Organe de retenue de roulement selon la revendication 6, dans lequel les agrafes (40) possèdent une partie radiale placée axialement à l'extérieur de la bague d'organe de retenue, et dans lequel les éléments séparateurs sont montés de manière pivotante sur un dispositif à arbre placé entre la partie radiale et les éléments séparateurs et passant à travers la bague d'organe de retenue.

8. Organe de retenue de roulement selon l'une quelconque des revendications précédentes, dans lequel les éléments séparateurs (72) comportent en outre des dispositifs à goujon (74) s'étendant dans la bague d'organe de retenue (78) pour assurer le montage pivotant des éléments séparateurs (72).

9. Organe de retenue de roulement selon la revendication 7, dans lequel la bague d'organe de retenue (78) a des fentes (76) en forme de trou de serrure coopérant avec le dispositif à goujon (74) pour assurer l'assemblage par enclenchement élastique des éléments séparateurs (72) sur la bague d'organe de retenue.

10. Organe de retenue de roulement selon la revendication 9, dans lequel les fentes (76) de la bague d'organe de retenue (78) s'étendent vers une périphérie radiale de la bague d'organe de retenue.

11. Organe de retenue de roulement selon la revendication 9, dans lequel les fentes (76) de la bague d'organe de retenue (78) s'étendent vers une périphérie radialement externe de la bague d'organe de retenue afin que le dispositif à goujon (74) soit mobile en direction radiale vers l'intérieur dans les fentes pour permettre l'assemblage par enclenchement élastique de la bague d'organe de retenue.

12. Organe de retenue de roulement selon la revendication 8, 9, 10 ou 11, dans lequel le dispositif à goujon (74) comporte une partie de tête (84) destinée à coopérer avec la bague d'organe de retenue (78) pour limiter le déplacement axial vers l'extérieur de la bague d'organe de retenue, et une partie d'arbre (86) et un manchon (90) recouvrant la partie d'arbre, le manchon étant déformable élastiquement lors de l'assemblage par enclenchement élastique de la bague d'organe de retenue.

13. Ensemble de roulement à rouleaux, comprenant un organe de retenue de roulement à rouleaux selon l'une quelconque des revendications précédentes, ayant des rouleaux (30) entre une bague interne de roulement et une bague externe de roulement, l'une des bagues de roulement ayant un flasque de butée.
